# EUROPEAN PATENT SPECIFICATION

(11) **EP 3 669 816 B1**
(45) Date of publication and mention of the grant of the patent: **13.04.2022**
(21) Application number: 19214149.7
(22) Date of filing: 18.10.2007
(51) Int. Cl.: A61C 7/14, A61C 7/16

(54) **METHOD FOR BONDING A DENTAL ARTICLE TO A TOOTH MODEL**
VERFAHREN ZUM KLEBEN EINER DENTALEN KOMPONENTE AUF EIN ZAHNMODELL
PROCÉDÉS DE COLLAGE D'UN ARTICLE DENTAIRE SUR UN MODÈLE DENTAIRE

(30) Priority: 23.10.2006 US 551823
(43) Date of publication of application: 24.06.2020
(62) Divisional of application: 16177283.5
(73) Proprietor: 3M Innovative Properties Company, St. Paul, MN 55133-3427 (US)
(72) Inventor: CINADER, David K., Jr., Saint Paul, Minnesota 55133-3427 (US)
(74) Representative: Vossius & Partner Patentanwälte Rechtsanwälte mbB

(56) References cited:
- US-A- 5 256 064
- US-A1- 2005 133 384
- US-A1- 2005 136 370

## Description

### BACKGROUND

Dental articles have been bonded to tooth structures for a wide variety of treatment regimens including, for example, orthodontic treatment. Orthodontic treatment involves movement of malpositioned teeth to orthodontically correct positions. Tiny orthodontic appliances known as brackets are connected to exterior surfaces of the patient's teeth, and an archwire is placed in a slot of each bracket. The archwire forms a track to guide movement of the teeth to desired positions for correct occlusion. End sections of the archwire are often received in appliances known as buccal tubes that are fixed to the patient's molar teeth. In recent years it has become common practice to use adhesives to bond orthodontic appliances to the surface of the tooth, using either direct or indirect methods. A variety of adhesives are available to the practitioner for bonding brackets to tooth surfaces, and many offer excellent bond strengths. High bond strengths are desirable for maintaining adhesion of the bracket to the tooth surface over the duration of the treatment process, which can typically be two years or more.

The use of a bonding method can typically require, among other steps, placing an amount of adhesive on a bracket or using a bracket having the adhesive precoated thereon, applying the bracket to the desired tooth structure, and removing excess adhesive. Conventional orthodontic adhesives, such as disclosed in US5256064 and US2005/0133384, are typically highly filled, which results in an adhesive with a white or tooth color. It is desirable that a sufficient but not an excess amount of adhesive is used to bond the bracket to the tooth structure. Excess adhesive on the tooth structure can eventually be a site for bacteria accumulation and/or staining from food or drink. Because orthodontic treatment can last from 18 to 36 months or more, bacteria accumulation can damage the tooth structure and may lead to discoloration of the adhesive, both of which are undesirable. Identifying and removing excess adhesive from tooth structure can be difficult if there is similarity in the adhesive color and the tooth color, i.e., due to a lack of a contrasting color in the adhesive. Color-changing adhesives that have an initial color that contrasts with the tooth structure have aided practitioners in the identification of excess adhesive. However, removal of the excess adhesive is typically still required.

New adhesives and methods are needed that offer satisfactory adhesion of a dental article to a tooth structure and simplify the removal of excess adhesive, if desired, upon application of the dental article to the tooth structure.

### SUMMARY

The invention provides a method for bonding a dental article to a tooth model as defined in the claims.

In certain embodiments, the hardenable dental composition is an unfilled or lightly filled composition (e.g., a primer or a self-etching primer).

Articles, kits, and methods as described herein can be advantageously used for bonding dental articles (e.g., orthodontic appliances) to tooth structures. For example, conventional orthodontic adhesives utilize a high filler loading to enable the adhesive to fill the gap between the base of the orthodontic appliance and the tooth structure to provide adequate adhesive properties upon hardening. However, excess highly filled adhesive can be difficult or time-consuming for the practitioner to remove. Articles, kits, and methods as described herein optionally include the combination of (a) a compressible material that can fill the gap between the surface of a dental article (e.g., the base of an orthodontic appliance) and a tooth structure, and (b) a hardenable dental composition that can advantageously be unfilled or lightly filled. The combination of the compressible material and the unfilled or lightly filled hardenable dental composition can provide adequate handling properties for application and adequate adhesive properties upon hardening, while allowing for simplified removal, if desired, of excess dental composition by the practitioner. Alternatively, such excess unfilled or lightly filled hardenable or hardened dental composition can typically be removed within a few days by brushing. In another alternative, such excess unfilled or lightly filled hardenable or hardened dental composition can remain on the tooth as, for example, a sealant that can preferably provide additional protection to the tooth structure.

### Definitions

As used herein, "dental composition" refers to a material (e.g., a dental or orthodontic material) capable of adhering (e.g., bonding) to a tooth structure. Dental compositions include, for example, adhesives (e.g., dental and/or orthodontic adhesives), cements (e.g., glass ionomer cements, resin-modified glass ionomer cements, and/or orthodontic cements), primers (e.g., orthodontic primers), restoratives, liners, sealants (e.g., orthodontic sealants), and coatings. Oftentimes a dental composition can be used to bond a dental article to a tooth structure.

As used herein, "excess" dental composition (e.g., excess adhesive) refers to unneeded dental composition at or near the periphery of the dental article after the dental article has been fully expressed on the tooth structure, and is often called flash.

As used herein, "dental article" refers to an article that can be adhered (e.g., bonded) to a tooth structure. Dental articles include, for example, crowns, bridges, veneers, inlays, onlays, fillings, orthodontic appliances and devices, and prostheses (e.g., partial or full dentures).

As used herein, "orthodontic appliance" refers to any device intended to be bonded to a tooth structure, including, but not limited to, orthodontic brackets, buccal tubes, lingual retainers, orthodontic bands, bite openers, buttons, and cleats. The appliance has a base for receiving adhesive and it can be a flange made of metal, plastic, ceramic, or combinations thereof. Alternatively, the base can be a custom base formed from cured adhesive layer(s) (i.e., single or multi-layer adhesives).

As used herein, a "packaged" article refers to an orthodontic appliance or card that is received in a container. Preferably, the container provides protection from environmental conditions including, for example, moisture and light.

As used herein, a "release" substrate refers to a substrate in contact with an article that is removed from the article before or during use of the article.

As used herein, "tooth structure" refers to surfaces including, for example, natural and artificial tooth surfaces, bone, tooth models, and the like.

As used herein, a "layer" refers to a discontinuous (e.g., a patterned layer) or continuous (e.g., non-patterned) material extending across all or a portion of a material different than the layer. The layer may be of uniform or varying thickness.

As used herein, a "multi-layer" adhesive refers to an adhesive having two or more distinctly different layers (i.e., layers differing in composition, and preferably having different chemical and/or physical properties).

As used herein, a "patterned layer" refers to a discontinuous material extending across (and optionally attached to) only selected portions of a material different than the patterned layer.

As used herein, a "non-patterned layer" refers to a continuous material extending across (and optionally attached to) an entire portion of a material different than the non-patterned layer.

In general, a layer "on," "extending across," or "attached to" another material different than the layer is intended to be broadly interpreted to optionally include one or more additional layers between the layer and the material different than the layer.

As used herein, "hardenable" is descriptive of a material or composition that can be cured (e.g., polymerized or crosslinked) or solidified, for example, by removing solvent (e.g., by evaporation and/or heating); heating to induce polymerization and/or crosslinking; irradiating to induce polymerization and/or crosslinking; and/or by mixing one or more components to induce polymerization and/or crosslinking. "Mixing" can be performed, for example, by combining two or more parts and mixing to form a homogeneous composition. Alternatively, two or more parts can be provided as separate layers that intermix (e.g., spontaneously or upon application of shear stress) at the interface to initiate polymerization.

As used herein, "hardened" refers to a material or composition that has been cured (e.g., polymerized or crosslinked) or solidified.

As used herein, "hardener" refers to something that initiates hardening of a resin. A hardener may include, for example, a polymerization initiator system, a photoinitiator system, and/or a redox initiator system.

As used herein, "photobleachable" refers to loss of color upon exposure to actinic radiation.

As used herein, the term "(meth)acrylate" is a shorthand reference to acrylate, methacrylate, or combinations thereof, and "(meth)acrylic" is a shorthand reference to acrylic, methacrylic, or combinations thereof.

As used herein, the chemical term "group" allows for substitution.

As used herein, "a" or "an" means one or more.

### BRIEF DESCRIPTION OF THE FIGURES

Figure 1 is a side view illustrating a dental article having a compressible material bonded to a surface thereof.
Figure 2 is perspective view an orthodontic appliance having a compressible material bonded to the base thereof.
Figure 3 is a side view of the orthodontic appliance of Figure 2.
Figure 4 is perspective view of a certain embodiment illustrating a packaged article including an orthodontic appliance having a compressible material bonded to the base thereof in a container in which the cover has been partially opened.
Figure 5 is an exemplary embodiment of a non-claimed method of bonding an orthodontic appliance to a tooth structure as described herein, which illustrates an orthodontic appliance, a compressible material, and a tooth structure prior to bonding the orthodontic appliance to the tooth structure.
Figure 6 is an exemplary embodiment of a non-claimed method of bonding an orthodontic appliance to a tooth structure as described herein, which illustrates an orthodontic appliance, a compressible material, and a tooth structure during or subsequent to bonding the orthodontic appliance to the tooth structure.
Figure 7 is an enlarged side cross-sectional view showing the non-claimed act of applying a dental appliance to a patient's tooth using a placement device used with an indirect bonding method.

### DETAILED DESCRIPTION OF ILLUSTRATIVE EMBODIMENTS

Articles, kits, and methods as described herein include a compressible material that can fill the gap between the surface of a dental article (e.g., the base of an orthodontic appliance) and a tooth structure. Articles, kits, and methods as described herein optionally include the combination of the compressible material and a hardenable dental composition that can advantageously be unfilled or lightly filled. The combination of the compressible material and the unfilled or lightly filled hardenable dental composition can provide adequate handling properties for application and adequate adhesive properties upon hardening, while allowing for simplified removal, if desired, of excess dental composition by the practitioner. Alternatively, such excess unfilled or lightly filled hardenable or hardened dental composition can typically be removed within a few days by brushing.

Articles, kits, and methods of the present invention include a compressible material that becomes a part of the bond upon applying the dental article to a tooth structure and hardening a hardenable dental composition. As used herein, a "compressible material" is a material that is reduced in volume upon application of pressures typically employed to place and/or position a dental article on a tooth structure. As used herein, compressible materials can include elastic and/or inelastic materials. For some embodiments, an inelastic compressible material can be advantageous in that the pressure used to compress the compressible material need not be maintained after the dental article is placed and/or positioned on the tooth structure (e.g., prior to and/or during hardening and/or curing of the dental composition).

A wide variety of compressible materials can be used in articles, kits, and methods of the present invention, including, for example, porous materials, foamed materials, and materials including capsules. The compressible material can be a hydrophilic material, a hydrophobic material, or combinations thereof. The compressible material can be any color, with white or off-white colored compressible materials being preferred for certain embodiments.

For embodiments in which the compressible material is a porous material, a wide variety of porous materials can be used in articles, kits, and methods of the present invention. As used herein, a "porous material" is a material that includes pores (e.g., voids and/or vessels). In preferred embodiments, the pores are in communication with one another such that a material contained therein (e.g., a hardenable dental composition) can pass between pores (e.g., percolate), for example, during compression of the porous material.

Exemplary porous materials include foams (e.g., polymeric foams including, for example, cellulose foams, glass foams, polymeric foams, and combinations thereof), sponges, nonwoven fabrics, glass wool, cotton fibers, cellulose fibers, and combinations thereof. Exemplary materials are described, for example, in U.S. Patent Nos. 4,605,402 (Iskra), 4,865,596 (Weisman et al.), 5,614,570 (Hansen et al.), 6,027,795 (Kabra et al.), 6,645,618 (Hobbs et al.); Japanese Patent No. JP63170437 (Sakadou et al.); and Nacht et al., "The microsponge: a novel topical programmable delivery system," in Topical Drug Delivery Formulations, D.W. Osborn and A.H. Amman (Eds.), Marel Dekker, New York, pp. 299-325 (1990).

Polymeric foams can include open-celled foams as described, for example, in U.S. Patent Nos. 5,770,636 (Wernsing et al.) and 5,817,704 (Shively et al.); closed-celled foams as described, for example, in Westerman et al., British Journal of Sports Medicine, 36:205-208 (2002); or combinations thereof. Alternatively, closed-cell foams may be converted into porous fibrous articles if oriented and microfibrillated as described, for example, in U.S. Patent No. 6,645,618 (Hobbs et al.). The hydrophilic/lipophilic balance at the surface of the foam structure can be modified, for example, using polyelectrolytes or functionalized particles during preparation as described, for example, in U.S. Patent No. 6,750,261 (Clear et al.). In some embodiments, the foam can be surface modified by thermal, chemical (e.g., acid-etching, corona treatment, plasma etching, glow discharge, or flame treatment), and/or photochemical (e.g., ultraviolet irradiation) means.

In certain embodiments, the polymeric foam has a void volume of at least 50 volume %, preferably at least 70 volume %, more preferably at least 85 volume %, and even more preferably at least 95 volume %. In certain embodiments, the polymeric foam has a void volume of at most 99.9 volume %, preferably at most 99.5 volume %, more preferably at most 99 volume %, and even more preferably at most 98 volume %. For polymeric foams in which the bulk density of the polymer is typically near 1, foam densities can be closely correlated with void volumes.

The porous material includes a hardenable dental composition at least partially within the pores thereof. For such embodiments, at least 80 volume %, preferably at least 90 volume %, and more preferably 100 volume % of the void volume is filled with the hardenable dental composition.

For certain embodiments in which the compressible material is a porous foam (e.g., cellulose foams, glass foams, polymeric foams, and combinations thereof), the foam can be prepared by a wide variety of methods known in the art. For example, porous foams can be prepared by incorporating one or more foaming agents into a material and activating the foaming agent(s). Foaming agents, also called blowing agents, can be used to foam plastics, rubbers, and thermoset resins to impart a cellular structure to the material. Chemical foaming agents form cells by decomposing to release gas when heated to their activation temperature. Physical blowing agents, on the other hand, are usually liquids at room temperature that volatilize when heated. Foams can also be prepared by dispersing bubbles or hollow capsules into the material, or using microspheres that encapsulate a physical blowing agent and expand into bubbles when heated. Alternatively, open-celled foams can be made by mixing a water-in-oil emulsion, either thermally or chemically polymerizing the oil phase, and then removing the water. For certain embodiments in which the compressible material is a porous foam, the porous foam can be prepared by foaming and at least partially hardening a hardenable dental composition.

For embodiments in which the compressible material includes capsules, the capsules are preferably hollow and can be ruptured by ordinary pressure encountered during application of the dental appliance to a tooth structure. Optionally, capsules can include a hardenable dental composition at least partially on an outer surface of the capsules. Optionally, hollow capsules can include a hardenable dental composition located at least partially within the capsules. A wide variety of capsules can be used including, for example, microcapsules (i.e., capsules that typically have a diameter less than 10 micrometers), glass beads, hollow plastic beads, and combinations thereof. Exemplary materials are disclosed, for example, in U.S. Patent Nos. 4,303,730 (Torobin), 4,336,338 (Downs et al.), 5,045,569 (Delgado), and 5,861,214 (Kitano et al.).

In certain examples articles, kits, and methodsinclude a dental article having a compressible material, and preferably a layer of compressible material, bonded to a surface thereof. Dental articles having a compressible material bonded to a surface thereof are to be distinguished from dental articles (e.g., precoated orthodontic appliances) having a release substrate (e.g., a release liner) on the precoated adhesive. In contrast to release substrates, which are designed to be removed before or during use of the article, a compressible material that is bonded to a surface of a dental articles is designed to remain on the dental article during use of the article, and in fact becomes a part of the bond upon applying the dental article to a tooth structure and hardening the hardenable dental composition.

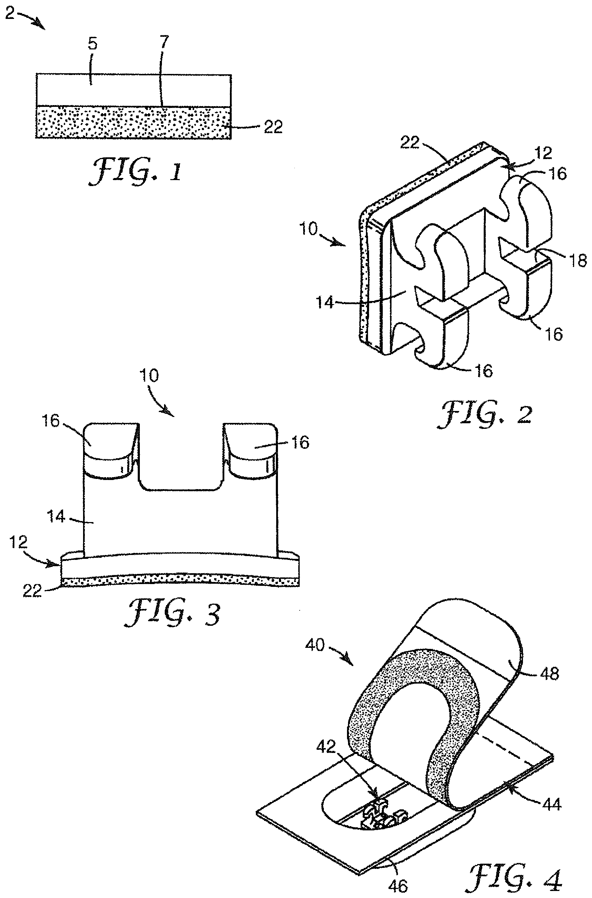

An exemplary embodiment for a dental article having a compressible material bonded to the base thereof is illustrated in Fig. 1. In Fig. 1, exemplary article 2 includes dental article 5 having surface 7 for bonding to a tooth structure. Exemplary article 2 can represent a wide variety of dental articles including, but not limited to, crowns, bridges, veneers, inlays, onlays, fillings, orthodontic appliances and devices, and prostheses (e.g., partial or full dentures). Exemplary article 2 further includes compressible material 22 bonded to surface 7 of dental article 5. Optionally compressible material 22 further includes a hardenable dental composition.

In the exemplary embodiment illustrated in Fig. 1, compressible material 22 extends across surface 7 of dental article 5. Compressible material 22 in combination with a hardenable dental composition can serve in whole or at least in part to securely fix article 2 to a tooth structure by a bond having sufficient strength to resist unintended detaclunent from the tooth structure. Optionally, compressible material 22 further includes a hardenable dental composition. In one embodiment, compressible material 22 is bonded by the manufacturer to surface 7 of dental article 5. In preferred embodiments, compressible material 22 is mechanically bonded to surface 7 of dental article 5, chemically bonded to surface 7 of dental article 5, or a combination thereof. As used herein, "mechanically bonded" means bonded or attached through physical means (e.g., using hooks, loops, protrusions, and the like, including combinations thereof). As used herein, "chemically bonded" means bonded or attached through chemical means (e.g., via ionic bonds, covalent bonds, hydrogen bonds, van der Waals interactions, and the like, including combinations thereof).

Compressible material 22 can further include a hardenable dental composition. In one embodiment, compressible material 22 is supplied having a hardenable dental composition therein. For embodiments in which compressible material 22 is bonded by the manufacturer to surface 7 of dental article 5 and supplied having a hardenable dental composition therein, it may be preferred to supply the article as a packaged article, as described herein. In another embodiment, a hardenable dental composition can be added to the compressible material by a practitioner. For example, the practitioner can apply a hardenable dental composition to compressible material 22, or compressible material 22 can be dipped or immersed in a hardenable dental composition.

It should be understood that article 2 can optionally include additional layer(s) of dental compositions (e.g., orthodontic adhesives, orthodontic primers, or combinations thereof, which are not illustrated in Fig. 1) in contact with compressible material 22. Specifically, such additional layer(s) can be between surface 7 and compressible material 22; on compressible material 22 opposite surface 7; or both. Such layers may or may not cover the same area, and may independently be discontinuous (e.g., a patterned layer) or continuous (e.g., non-patterned) materials extending across all or a portion of compressible material 22.

Exemplary embodiments for an orthodontic appliance having a compressible material bonded to the base thereof are illustrated in Figs. 2 and 3. In Figs. 2 and 3, an exemplary orthodontic appliance is designated by the numeral 10 and is a bracket, although other appliances such as buccal tubes, buttons and other attachments are also possible. Appliance 10 includes a base 12. Appliance 10 also has a body 14 that extends outwardly from base 12. Base 12 can be a flange made of metal, plastic, ceramic, and combinations thereof. Base 12 can include a mesh-like structure, such as a fine wire screen. Base 12 can include particles (such as shards, grit, spheres, or other structure that optionally includes undercuts). Alternatively, base 12 can be a custom base formed from one or more hardened dental composition layer(s). Tiewings 16 are connected to body 14, and archwire slot 18 extends through a space between tiewings 16. Base 12, body 14, and tiewings 16 may be made of any one of a number of materials suitable for use in the oral cavity and having sufficient strength to withstand the correction forces applied during treatment. Suitable materials include, for example, metallic materials (such as stainless steel), ceramic materials (such as monocrystalline or polycrystalline alumina), and plastic materials (such as fiber-reinforced polycarbonate). Optionally, base 12, body 14, and tiewings 16 are integrally made as a unitary component.

In the exemplary embodiment illustrated in Figs. 2 and 3, compressible material 22 extends across base 12 of appliance 10. Compressible material 22 in combination with a hardenable dental composition can serve in whole or at least in part to securely fix appliance 10 to the patient's tooth by a bond having sufficient strength to resist unintended detachment from the tooth during the course of treatment. Optionally, compressible material 22 further includes a hardenable dental composition.

In one embodiment, compressible material 22 is bonded by the manufacturer to base 12 of appliance 10. In preferred embodiments, compressible material 22 is mechanically bonded to base 12 of appliance 10, chemically bonded to base 12 of appliance 10, or a combination thereof.

Compressible material 22 can further include a hardenable dental composition. In one embodiment, compressible material 22 is supplied having a hardenable dental composition therein. For embodiments in which compressible material 22 is bonded by the manufacturer to base 12 of appliance 10 and supplied having a hardenable dental composition therein, it may be preferred to supply the article as a packaged article, as described herein. Exemplary containers are well known in the art and are disclosed, for example, in U.S. Pat. Nos. 5,172,809 (Jacobs et al.) and 6,089,861 (Kelly et al.). In another embodiment, a hardenable dental composition can be added to the compressible material by a practitioner. For example, the practitioner can apply a hardenable dental composition to compressible material 22, or compressible material 22 can be dipped or immersed in a hardenable dental composition.

It should be understood that orthodontic appliance 10 can optionally include additional layer(s) of dental compositions (e.g., orthodontic adhesives, orthodontic primers, or combinations thereof, which are not illustrated in Figs. 2 and 3) in contact with compressible material 22. Specifically, such additional layer(s) can be between base 12 and compressible material 22; on compressible material 22 opposite base 12; or both. Such layers may or may not cover the same area, and may independently be discontinuous (e.g., a patterned layer) or continuous (e.g., non-patterned) materials extending across all or a portion of compressible material 22.

Referring to Fig. 4, an exemplary embodiment of packaged article 40 is shown including orthodontic appliance 42, which can be the same or different than the exemplary embodiment illustrated in Figs. 2 and 3. Package 44 includes container 46 and cover 48. Cover 48, which is releasably connected to container 46 as initially provided, is peeled from container 46 to open the package for removal of orthodontic appliance 42. In Fig. 4, cover 48 has been peeled back from container 46 to partially open package 44.

In preferred embodiments, the package provides excellent protection against degradation of the hardenable dental composition(s) (e.g., photocurable materials), even after extended periods of time. Such containers are particularly useful for embodiments in which the hardenable dental composition optionally includes dyes that impart a color changing feature to the adhesive. Such containers preferably effectively block the passage of actinic radiation over a broad spectral range, and as a result, the dental compositions do not prematurely lose color during storage.

In preferred embodiments, the package includes container 46 comprising a polymer and metallic particles. As an example, container 46 may be made of polypropylene that is compounded with aluminum filler or receives an aluminum powder coating as disclosed, for example, in U.S. Pat. Application Publication No. 2003/0196914 A1 (Tzou et al.). The combination of polymer and metallic particles provides a highly effective block to the passage of actinic radiation to color changing dyes, even though such dyes are known to be highly sensitive to light. Such containers also exhibit good vapor barrier properties. As a result, the rheological characteristics of the hardenable dental composition(s) are less likely to change over extended periods of time. For example, the improved vapor barrier properties of such containers provide substantial protection against degradation of the handling characteristics of adhesives so that the dental compositions do not prematurely cure or dry or become otherwise unsatisfactory. Suitable covers 48 for such containers can be made of any material that is substantially opaque to the transmission of actinic radiation so that the dental compositions do not prematurely cure. Examples of suitable materials for cover 48 include laminates of aluminum foil and polymers. For example, the laminate may comprise a layer of polyethyleneterephthalate, adhesive, aluminum foil, adhesive and oriented polypropylene.

In some embodiments, a packaged orthodontic appliance including a compressible material and a hardenable dental composition may include a release substrate as described, for example, in U.S. Patent No. 6,183,249 (Brennan et al.).

In some embodiments, a packaged article can include a set of orthodontic appliances, wherein at least one of the appliances has a compressible material thereon. Additional examples of articles and sets of appliances are described in U.S. Pat. Application Publication No. 2005/0133384 A1 (Cinader et al.). Packaged orthodontic appliances are described, for example, in U.S. Pat. Application Publication No. 2003/0196914 A1 (Tzou et al.) and U.S. Patent Nos. 4,978,007 (Jacobs et al.), 5,015,180 (Randklev), 5,328,363 (Chester et al.), and 6,183,249 (Brennan et al.).

### DENTAL COMPOSITIONS

Hardenable dental compositions useful in articles, kits, and methods of the present invention typically include one or more hardenable components and a hardener. Optionally, hardenable dental compositions as described herein can include, for example, an initiator system, an ethylenically unsaturated compound, and/or one or more fillers. Hardenable and hardened dental compositions as described herein can be used for a variety of dental and orthodontic applications that utilize a material capable of adhering (e.g., bonding) to a tooth structure. Uses for such hardenable and hardened dental compositions include, for example, uses as adhesives (e.g., dental and/or orthodontic adhesives), cements (e.g., glass ionomer cements, resin-modified glass ionomer cements, and orthodontic cements), primers (e.g., orthodontic primers), restoratives, liners, sealants (e.g., orthodontic sealants), coatings, and combinations thereof.

Hardenable dental compositions (e.g., hardenable dental compositions) as described herein typically include a hardenable (e.g., polymerizable) component, thereby forming hardenable (e.g., polymerizable) compositions. The hardenable component can include a wide variety of chemistries, such as ethylenically unsaturated compounds (with or without acid functionality), epoxy (oxirane) resins, vinyl ethers, photopolymerization systems, redox cure systems, glass ionomer cements, polyethers, polysiloxanes, and the like. In some embodiments, the dental compositions can be hardened (e.g., polymerized by conventional photopolymerization and/or chemical polymerization techniques) prior to applying the hardened dental composition. In other embodiments, a dental composition can be hardened (e.g., polymerized by conventional photopolymerization and/or chemical polymerization techniques) after applying the dental composition.

In certain embodiments, the dental compositions are photopolymerizable, i.e., the dental compositions contain a photoinitiator (i.e., a photoinitiator system) that upon irradiation with actinic radiation initiates the polymerization (or hardening) of the dental composition. Such photopolymerizable compositions can be free radically polymerizable or cationically polymerizable. In other embodiments, the dental compositions are chemically hardenable, i.e., the dental compositions contain a chemical initiator (i.e., initiator system) that can polymerize, cure, or otherwise harden the dental composition without dependence on irradiation with actinic radiation. Such chemically hardenable dental compositions are sometimes referred to as "self-cure" compositions and may include glass ionomer cements (e.g., conventional and resin-modified glass ionomer cements), redox cure systems, and combinations thereof.

Suitable photopolymerizable components that can be used in the dental compositions as disclosed herein include, for example, epoxy resins (which contain cationically active epoxy groups), vinyl ether resins (which contain cationically active vinyl ether groups), ethylenically unsaturated compounds (which contain free radically active unsaturated groups, e.g., acrylates and methacrylates), and combinations thereof. Also suitable are polymerizable materials that contain both a cationically active functional group and a free radically active functional group in a single compound. Examples include epoxy-functional acrylates, epoxy-functional methacrylates, and combinations thereof.

### ETHYLENICALLY UNSATURATED COMPOUNDS

Dental compositions as disclosed herein may include one or more hardenable components in the form of ethylenically unsaturated compounds with or without acid functionality, thereby forming hardenable dental compositions.

Suitable hardenable dental compositions may include hardenable components (e.g., photopolymerizable compounds) that include ethylenically unsaturated compounds (which contain free radically active unsaturated groups). Examples of useful ethylenically unsaturated compounds include acrylic acid esters, methacrylic acid esters, hydroxy-functional acrylic acid esters, hydroxy-functional methacrylic acid esters, and combinations thereof.

The dental compositions (e.g., photopolymerizable compositions) may include compounds having free radically active functional groups that may include monomers, oligomers, and polymers having one or more ethylenically unsaturated group. Suitable compounds contain at least one ethylenically unsaturated bond and are capable of undergoing addition polymerization. Such free radically polymerizable compounds include mono-, di- or poly-(meth)acrylates (i.e., acrylates and methacrylates) such as, methyl (meth)acrylate, ethyl acrylate, isopropyl methacrylate, n-hexyl acrylate, stearyl acrylate, allyl acrylate, glycerol triacrylate, ethyleneglycol diacrylate, diethyleneglycol diacrylate, triethyleneglycol dimethacrylate, 1,3-propanediol di(meth)acrylate, trimethylolpropane triacrylate, 1,2,4-butanetriol trimethacrylate, 1,4-cyclohexanediol diacrylate, pentaerythritol tetra(meth)acrylate, sorbitol hexacrylate, tetrahydrofurfuryl (meth)acrylate, bis[1-(2-acryloxy)]-p-ethoxyphenyldimethylmethane, bis[1-(3-acryloxy-2-hydroxy)]-p-propoxyphenyldimethylmethane, ethoxylated bisphenol A di(meth)acrylate, and trishydroxyethyl-isocyanurate trimethacrylate; (meth)acrylamides (i.e., acrylamides and methacrylamides) such as (meth)acrylamide, methylene bis-(meth)acrylamide, and diacetone (meth)acrylamide; urethane (meth)acrylates; the bis-(meth)acrylates of polyethylene glycols (preferably of molecular weight 200-500), copolymerizable mixtures of acrylated monomers such as those in U.S. Pat. No. 4,652, 274 (Boettcher et al.), acrylated oligomers such as those of U.S. Pat. No. 4,642,126 (Zador et al.), and poly(ethylenically unsaturated) carbamoyl isocyanurates such as those disclosed in U.S. Pat. No. 4,648,843 (Mitra); and vinyl compounds such as styrene, diallyl phthalate, divinyl succinate, divinyl adipate and divinyl phthalate. Other suitable free radically polymerizable compounds include siloxane-functional (meth)acrylates as disclosed, for example, in WO-00/38619 (Guggenberger et al.), WO-01/92271 (Weinmann et al.), WO-01/07444 (Guggenberger et al.), WO-00/42092 (Guggenberger et al.) and fluoropolymer-functional (meth)acrylates as disclosed, for example, in U.S. Pat. No. 5,076,844 (Fock et al.), U.S. Pat. No. 4,356,296 (Griffith et al.), EP-0373 384 (Wagenknecht et al.), EP-0201 031 (Reiners et al.), and EP-0201 778 (Reiners et al.). Mixtures of two or more free radically polymerizable compounds can be used if desired.

The hardenable component may also contain hydroxyl groups and ethylenically unsaturated groups in a single molecule. Examples of such materials include hydroxyalkyl (meth)acrylates, such as 2-hydroxyethyl (meth)acrylate and 2-hydroxypropyl (meth)acrylate; glycerol mono- or di-(meth)acrylate; trimethylolpropane mono- or di-(meth)acrylate; pentaerythritol mono-, di-, and tri-(meth)acrylate; sorbitol mono-, di-, tri-, tetra-, or penta-(meth)acrylate; and 2,2-bis[4-(2-hydroxy-3-ethacryloxypropoxy)phenyl]propane (bisGMA). Suitable ethylenically unsaturated compounds are also available from a wide variety of commercial sources, such as Sigma-Aldrich, St. Louis. Mixtures of ethylenically unsaturated compounds can be used if desired.

In certain embodiments hardenable components include PEGDMA (polyethyleneglycol dimethacrylate having a molecular weight of approximately 400), bisGMA, UDMA (urethane dimethacrylate), GDMA (glycerol dimethacrylate), TEGDMA (triethyleneglycol dimethacrylate), bisEMA6 as described in U.S. Pat. No. 6,030,606 (Holmes), and NPGDMA (neopentylglycol dimethacrylate). Various combinations of the hardenable components can be used if desired.

Preferably dental compositions as disclosed herein include at least 5% by weight, preferably at least 10% by weight, and more preferably at least 15% by weight ethylenically unsaturated compounds (e.g., with and/or without acid functionality), based on the total weight of the unfilled composition. Certain dental compositions as disclosed herein (e.g., unfilled dental compositions that consist of one or more ethylencially unsaturated compounds and an initiator system) can include 99% by weight or even higher of ethylenically unsaturated compounds (e.g., with and/or without acid functionality), based on the total weight of the unfilled composition. Other certain dental compositions as disclosed herein include at most 99% by weight, preferably at most 98% by weight, and more preferably at most 95% by weight ethylenically unsaturated compounds (e.g., with and/or without acid functionality), based on the total weight of the unfilled composition.

### ETHYLENICALLY UNSATURATED COMPOUNDS WITH ACID FUNCTIONALITY

Dental compositions as disclosed herein may include one or more hardenable components in the form of ethylenically unsaturated compounds with acid functionality, thereby forming hardenable dental compositions.

As used herein, ethylenically unsaturated compounds with acid functionality is meant to include monomers, oligomers, and polymers having ethylenic unsaturation and acid and/or acid-precursor functionality. Acid-precursor functionalities include, for example, anhydrides, acid halides, and pyrophosphates. The acid functionality can include carboxylic acid functionality, phosphoric acid functionality, phosphonic acid functionality, sulfonic acid functionality, or combinations thereof.

Ethylenically unsaturated compounds with acid functionality include, for example, α,β-unsaturated acidic compounds such as glycerol phosphate mono(meth)acrylates, glycerol phosphate di(meth)acrylates, hydroxyethyl (meth)acrylate (e.g., HEMA) phosphates, bis((meth)acryloxyethyl) phosphate, ((meth)acryloxypropyl) phosphate, bis((meth)acryloxypropyl) phosphate, bis((meth)acryloxy)propyloxy phosphate, (meth)acryloxyhexyl phosphate, bis((meth)acryloxyhexyl) phosphate, (meth)acryloxyoctyl phosphate, bis((meth)acryloxyoctyl) phosphate, (meth)acryloxydecyl phosphate, bis((meth)acryloxydecyl) phosphate, caprolactone methacrylate phosphate, citric acid di- or tri-methacrylates, poly(meth)acrylated oligomaleic acid, poly(meth)acrylated polymaleic acid, poly(meth)acrylated poly(meth)acrylic acid, poly(meth)acrylated polycarboxyl-polyphosphonic acid, poly(meth)acrylated polychlorophosphoric acid, poly(meth)acrylated polysulfonate, poly(meth)acrylated polyboric acid, and the like, may be used as components in the hardenable component system. Also monomers, oligomers, and polymers of unsaturated carbonic acids such as (meth)acrylic acids, aromatic (meth)acrylated acids (e.g., methacrylated trimellitic acids), and anhydrides thereof can be used. Certain compositions for use in preferred methods of the present invention include an ethylenically unsaturated compound with acid functionality having at least one P-OH moiety.

Certain of these compounds are obtained, for example, as reaction products between isocyanatoalkyl (meth)acrylates and carboxylic acids. Additional compounds of this type having both acid-functional and ethylenically unsaturated components are described in U.S. Pat. Nos. 4,872,936 (Engelbrecht) and 5,130,347 (Mitra). A wide variety of such compounds containing both the ethylenically unsaturated and acid moieties can be used. Mixtures of such compounds can be used if desired.

Additional ethylenically unsaturated compounds with acid functionality include, for example, polymerizable bisphosphonic acids as disclosed for example, in U.S. Pat. Application Publication No. 2004/0206932 (Abuelyaman et al.); AA:ITA:IEM (copolymer of acrylic acid:itaconic acid with pendent methacrylate made by reacting AA:ITA copolymer with sufficient 2-isocyanatoethyl methacrylate to convert a portion of the acid groups of the copolymer to pendent methacrylate groups as described, for example, in Example 11 of U.S. Pat. No. 5,130,347 (Mitra)); and those recited in U.S. Pat. Nos. 4,259,075 (Yamauchi et al.), 4,499,251 (Omura et al.), 4,537,940 (Omura et al.), 4,539,382 (Omura et al.), 5,530,038 (Yamamoto et al.), 6,458,868 (Okada et al.), and European Pat. Application Publication Nos. EP 712,622 (Tokuyama Corp.) and EP 1,051,961 (Kuraray Co., Ltd.).

Dental compositions as disclosed herein can also include compositions that include combinations of ethylenically unsaturated compounds with acid functionality. Preferably the dental compositions are self-adhesive and are non-aqueous. For example, such compositions can include: a first compound including at least one (meth)acryloxy group and at least one -O-P(O)(OH)ₓ group, wherein x=1 or 2, and wherein the at least one -O-P(O)(OH)ₓ group and the at least one (meth)acryloxy group are linked together by a C1-C4 hydrocarbon group; a second compound including at least one (meth)acryloxy group and at least one -O-P(O)(OH)ₓ group, wherein x=1 or 2, and wherein the at least one -O-P(O)(OH)ₓ group and the at least one (meth)acryloxy group are linked together by a C5-C12 hydrocarbon group; an ethylenically unsaturated compound without acid functionality; an initiator system; and a filler. Such compositions are described, for example, in U.S. Provisional Application Serial No. 60/600,658 (Luchterhandt et al.), filed on August 11, 2004.

Preferably dental compositions as disclosed herein include at least 5% by weight, preferably at least 10% by weight, and more preferably at least 15% by weight ethylenically unsaturated compounds with acid functionality, based on the total weight of the unfilled composition. Certain dental compositions as disclosed herein (e.g., unfilled dental compositions that consist of one or more ethylencially unsaturated compounds and an initiator system) can include 99% by weight or even higher of ethylenically unsaturated compounds with acid functionality, based on the total weight of the unfilled composition. Other certain dental compositions as disclosed herein include at most 99% by weight, preferably at most 98% by weight, and more preferably at most 95% by weight ethylenically unsaturated compounds with acid functionality, based on the total weight of the unfilled composition.

### EPOXY (OXIRANE) OR VINYL ETHER COMPOUNDS

Hardenable dental compositions as disclosed herein may include one or more hardenable components in the form of epoxy (oxirane) compounds (which contain cationically active epoxy groups) or vinyl ether compounds (which contain cationically active vinyl ether groups), thereby forming hardenable dental compositions.

The epoxy or vinyl ether monomers can be used alone as the hardenable component in a dental composition or in combination with other monomer classes, e.g., ethylenically unsaturated compounds as described herein, and can include as part of their chemical structures aromatic groups, aliphatic groups, cycloaliphatic groups, and combinations thereof.

Examples of epoxy (oxirane) compounds include organic compounds having an oxirane ring that is polymerizable by ring opening. These materials include monomeric epoxy compounds and epoxides of the polymeric type and can be aliphatic, cycloaliphatic, aromatic or heterocyclic. These compounds generally have, on the average, at least 1 polymerizable epoxy group per molecule, in some embodiments at least 1.5, and in other embodiments at least 2 polymerizable epoxy groups per molecule. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). The epoxides may be pure compounds or may be mixtures of compounds containing one, two, or more epoxy groups per molecule. The "average" number of epoxy groups per molecule is determined by dividing the total number of epoxy groups in the epoxy-containing material by the total number of epoxy-containing molecules present.

These epoxy-containing materials may vary from low molecular weight monomeric materials to high molecular weight polymers and may vary greatly in the nature of their backbone and substituent groups. Illustrative of permissible substituent groups include halogens, ester groups, ethers, sulfonate groups, siloxane groups, carbosilane groups, nitro groups, phosphate groups, and the like. The molecular weight of the epoxy-containing materials may vary from 58 to 100,000 or more.

Suitable epoxy-containing materials useful as the resin system reactive components for use in methods of the present invention are listed in U.S. Pat. Nos. 6,187,836 (Oxman et al.) and 6,084,004 (Weinmann et al.).

Other suitable epoxy resins useful as the resin system reactive components include those which contain cyclohexene oxide groups such as epoxycyclohexanecarboxylates, typified by 3,4-epoxycyclohexylmethyl-3,4-epoxycyclohexanecarboxylate, 3,4-epoxy-2-methylcyclohexylmethyl-3,4-epoxy-2-methylcyclohexane carboxylate, and bis(3,4-epoxy-6-metliylcyclohexyl-methyl) adipate. For a more detailed list of useful epoxides of this nature, reference is made to U.S. Pat. Nos. 6,245,828 (Weinmann et al.) and 5,037,861 (Crivello et al.); and U.S. Pat. Application Publication No. 2003/035899 (Klettke et al.).

Other epoxy resins that may be useful in dental compositions as disclosed herein include glycidyl ether monomers. Examples are glycidyl ethers of polyhydric phenols obtained by reacting a polyhydric phenol with an excess of chlorohydrin such as epichlorohydrin (e.g., the diglycidyl ether of 2,2-bis-(2,3-epoxypropoxyphenol)propane). Further examples of epoxides of this type are described in U.S. Pat. No. 3,018,262 (Schroeder), and in "Handbook of Epoxy Resins" by Lee and Neville, McGraw-Hill Book Co., New York (1967).

Other suitable epoxides useful as the resin system reactive components are those that contain silicon, useful examples of which are described in International Pat. Application Publication No. WO 01/51540 (Klettke et al.).

Additional suitable epoxides useful as the resin system reactive components include octadecylene oxide, epichlorohydrin, styrene oxide, vinyl cyclohexene oxide, glycidol, glycidylmethacrylate, diglycidyl ether of Bisphenol A and other commercially available epoxides, as provided in U.S. Pat. Application Publication No. 2005/0113477 A1 (Oxman et al.).

Blends of various epoxy-containing materials are also contemplated. Examples of such blends include two or more weight average molecular weight distributions of epoxy-containing compounds, such as low molecular weight (below 200), intermediate molecular weight (200 to 10,000) and higher molecular weight (above 10,000). Alternatively or additionally, the epoxy resin may contain a blend of epoxy-containing materials having different chemical natures, such as aliphatic and aromatic, or functionalities, such as polar and non-polar.

Other types of useful hardenable components having cationically active functional groups include vinyl ethers, oxetanes, spiro-orthocarbonates, spiro-orthoesters, and the like.

If desired, both cationically active and free radically active functional groups may be contained in a single molecule. Such molecules may be obtained, for example, by reacting a di- or poly-epoxide with one or more equivalents of an ethylenically unsaturated carboxylic acid. An example of such a material is the reaction product of UVR-6105 (available from Union Carbide) with one equivalent of methacrylic acid. Commercially available materials having epoxy and free-radically active functionalities include the CYCLOMER series, such as CYCLOMER M-100, M-101, or A-200 available from Daicel Chemical, Japan, and EBECRYL-3605 available from Radcure Specialties, UCB Chemicals, Atlanta, GA.

The cationically curable components may further include a hydroxyl-containing organic material. Suitable hydroxyl-containing materials may be any organic material having hydroxyl functionality of at least 1, and preferably at least 2. Preferably, the hydroxyl-containing material contains two or more primary or secondary aliphatic hydroxyl groups (i.e., the hydroxyl group is bonded directly to a non-aromatic carbon atom). The hydroxyl groups can be terminally situated, or they can be pendent from a polymer or copolymer. The molecular weight of the hydroxyl-containing organic material can vary from very low (e.g., 32) to very high (e.g., one million or more). Suitable hydroxyl-containing materials can have low molecular weights (i.e., from 32 to 200), intermediate molecular weights (i.e., from 200 to 10,000, or high molecular weights (i.e., above 10,000). As used herein, all molecular weights are weight average molecular weights.

The hydroxyl-containing materials may be non-aromatic in nature or may contain aromatic functionality. The hydroxyl-containing material may optionally contain heteroatoms in the backbone of the molecule, such as nitrogen, oxygen, sulfur, and the like. The hydroxyl-containing material may, for example, be selected from naturally occurring or synthetically prepared cellulosic materials. The hydroxyl-containing material should be substantially free of groups which may be thermally or photolytically unstable; that is, the material should not decompose or liberate volatile components at temperatures below 100°C or in the presence of actinic light which may be encountered during the desired photopolymerization conditions for the polymerizable compositions.

Suitable hydroxyl-containing materials useful in methods of the present invention are listed in U.S. Pat. No. 6,187,836 (Oxman et al.).

The hardenable component(s) may also contain hydroxyl groups and cationically active functional groups in a single molecule. An example is a single molecule that includes both hydroxyl groups and epoxy groups.

### GLASS IONOMERS

Hardenable dental compositions as described herein may include glass ionomer cements such as conventional glass ionomer cements that typically employ as their main ingredients a homopolymer or copolymer of an ethylenically unsaturated carboxylic acid (e.g., poly acrylic acid, copoly (acrylic, itaconic acid), and the like), a fluoroaluminosilicate ("FAS") glass, water, and a chelating agent such as tartaric acid. Conventional glass ionomers (i.e., glass ionomer cements) typically are supplied in powder/liquid formulations that are mixed just before use. The mixture will undergo selfhardening in the dark due to an ionic reaction between the acidic repeating units of the polycarboxylic acid and cations leached from the glass.

The glass ionomer cements may also include resin-modified glass ionomer ("RMGI") cements. Like a conventional glass ionomer, an RMGI cement employs an FAS glass. However, the organic portion of an RMGI is different. In one type of RMGI, the polycarboxylic acid is modified to replace or end-cap some of the acidic repeating units with pendent curable groups and a photoinitiator is added to provide a second cure mechanism, e.g., as described in U.S. Pat. No. 5,130,347 (Mitra). Acrylate or methacrylate groups are usually employed as the pendant curable group. In another type of RMGI, the cement includes a polycarboxylic acid, an acrylate or methacrylate-functional monomer and a photoinitiator, e.g., as in Mathis et al., "Properties of a New Glass Ionomer/Composite Resin Hybrid Restorative", Abstract No. 51, J. Dent Res., 66:113 (1987) and as in U.S. Pat. Nos. 5,063,257 (Akahane et al.), 5,520,725 (Kato et al.), 5,859,089 (Qian), 5,925,715 (Mitra) and 5,962,550 (Akahane et al.). In another type of RMGI, the cement may include a polycarboxylic acid, an acrylate or methacrylate-functional monomer, and a redox or other chemical cure system, e.g., as described in U.S. Pat. Nos. 5,154,762 (Mitra et al.), 5,520,725 (Kato et al.), and 5,871,360 (Kato). In another type of RMGI, the cement may include various monomer-containing or resincontaining components as described in U.S. Pat. Nos. 4,872,936 (Engelbrecht), 5,227,413 (Mitra), 5,367,002 (Huang et al.), and 5,965,632 (Orlowski). RMGI cements are preferably formulated as powder/liquid or paste/paste systems, and contain water as mixed and applied. The dental compositions are able to harden in the dark due to the ionic reaction between the acidic repeating units of the polycarboxylic acid and cations leached from the glass, and commercial RMGI products typically also cure on exposure of the cement to light from a dental curing lamp. RMGI cements that contain a redox cure system and that can be cured in the dark without the use of actinic radiation are described in U. S. Pat. No. 6,765,038 (Mitra).

### PHOTOINITIATOR SYSTEMS

In certain embodiments, the dental compositions of the present invention are photopolymerizable, i.e., the dental compositions contain a photopolymerizable component and a photoinitiator (i.e., a photoinitiator system) that upon irradiation with actinic radiation initiates the polymerization (or hardening) of the dental composition. Such photopolymerizable compositions can be free radically polymerizable or cationically polymerizable.

Suitable photoinitiators (i.e., photoinitiator systems that include one or more compounds) for polymerizing free radically photopolymerizable compositions include binary and tertiary systems. Typical tertiary photoinitiators include an iodonium salt, a photosensitizer, and an electron donor compound as described in U.S. Pat. No. 5,545,676 (Palazzotto et al.). Preferred iodonium salts are the diaryl iodonium salts, e.g., diphenyliodonium chloride, diphenyliodonium hexafluorophosphate, diphenyliodonium tetrafluoroborate, and tolylcumyliodonium tetrakis(pentafluorophenyl)borate. Preferred photosensitizers are monoketones and diketones that absorb some light within a range of 400 nm to 520 nm (preferably, 450 nm to 500 nm). More preferred compounds are alpha diketones that have some light absorption within a range of 400 nm to 520 nm (even more preferably, 450 to 500 nm). Preferred compounds are camphorquinone, benzil, furil, 3,3,6,6-tetramethylcyclohexanedione, phenanthraquinone, 1-phenyl-1,2-propanedione and other 1-aryl-2-alkyl-1,2-ethanediones, and cyclic alpha diketones. Most preferred is camphorquinone. Preferred electron donor compounds include substituted amines, e.g., ethyl dimethylaminobenzoate. Other suitable tertiary photoinitiator systems useful for photopolymerizing cationically polymerizable resins are described, for example, in U.S. Pat. No. 6,765,036 (Dede et al.).

Other suitable photoinitiators for polymerizing free radically photopolymerizable compositions include the class of phosphine oxides that typically have a functional wavelength range of 380 nm to 1200 nm. Preferred phosphine oxide free radical initiators with a functional wavelength range of 380 nm to 450 nm are acyl and bisacyl phosphine oxides such as those described in U.S. Pat. Nos. 4,298,738 (Lechtken et al.), 4,324,744 (Lechtken et al.), 4,385,109 (Lechtken et al.), 4,710,523 (Lechtken et al.), and 4,737,593 (Ellrich et al.), 6,251,963 (Kohler et al.); and EP Application No. 0 173 567 A2 (Ying).

Commercially available phosphine oxide photoinitiators capable of free-radical initiation when irradiated at wavelength ranges of greater than 380 nm to 450 nm include bis(2,4,6-trimethylbenzoyl)phenyl phosphine oxide (IRGACURE 819, Ciba Specialty Chemicals, Tarrytown, NY), bis(2,6-dimethoxybenzoyl)-(2,4,4-trimethylpentyl) phosphine oxide (CGI 403, Ciba Specialty Chemicals), a 25:75 mixture, by weight, of bis(2,6-dimethoxybenzoyl)-2,4,4-trimethylpentyl phosphine oxide and 2-hydroxy-2-methyl-1-phenylpropan-1-one (IRGACURE 1700, Ciba Specialty Chemicals), a 1:1 mixture, by weight, of bis(2,4,6-trimethylbenzoyl)phenyl phosphine oxide and 2-hydroxy-2-methyl-1-phenylpropane-1-one (DAROCUR 4265, Ciba Specialty Chemicals), and ethyl 2,4,6-trimethylbenzylphenyl phosphinate (LUCIRIN LR8893X, BASF Corp., Charlotte, NC).

Typically, the phosphine oxide initiator is present in the photopolymerizable composition in catalytically effective amounts, such as from 0.1 weight percent to 5.0 weight percent, based on the total weight of the dental composition.

Tertiary amine reducing agents may be used in combination with an acylphosphine oxide. Illustrative tertiary amines useful in the invention include ethyl 4-(N,N-dimethylamino)benzoate and N,N-dimethylaminoethyl methacrylate. When present, the amine reducing agent is present in the photopolymerizable composition in an amount from 0.1 weight percent to 5.0 weight percent, based on the total weight of the dental composition. Useful amounts of other initiators are well known to those of skill in the art.

Suitable photoinitiators for polymerizing cationically photopolymerizable compositions include binary and tertiary systems. Typical tertiary photoinitiators include an iodonium salt, a photosensitizer, and an electron donor compound as described in EP 0 897 710 (Weinmann et al.); in U.S. Pat. Nos. 5,856,373 (Kaisaki et al.), 6,084,004 (Weinmann et al.), 6,187,833 (Oxman et al.), and 6,187,836 (Oxman et al.); and in U.S. Pat. No. 6,765,036 (Dede et al.). The dental compositions of the invention can include one or more anthracene-based compounds as electron donors. In some embodiments, the dental compositions comprise multiple substituted anthracene compounds or a combination of a substituted anthracene compound with unsubstituted anthracene. The combination of these mixed-anthracene electron donors as part of a photoinitiator system provides significantly enhanced cure depth and cure speed and temperature insensitivity when compared to comparable single-donor photoinitiator systems in the same matrix. Such compositions with anthracene-based electron donors are described in U.S. Pat. Application Publication No. 2005/0113477 A1 (Oxman et al.).

Suitable iodonium salts include tolylcumyliodonium tetrakis(pentafluorophenyl)borate, tolylcumyliodonium tetrakis(3,5-bis(trifluoromethyl)-phenyl)borate, and the diaryl iodonium salts, e.g., diphenyliodonium chloride, diphenyliodonium hexafluorophosphate, diphenyliodonium hexafluoroantimonate, and diphenyliodonium tetrafluoroboarate. Suitable photosensitizers are monoketones and diketones that absorb some light within a range of 450 nm to 520 nm (preferably, 450 nm to 500 nm). More suitable compounds are alpha diketones that have some light absorption within a range of 450 nm to 520 nm (even more preferably, 450 nm to 500 nm). Preferred compounds are camphorquinone, benzil, furil, 3,3,6,6-tetramethylcyclohexanedione, phenanthraquinone and other cyclic alpha diketones. Most preferred is camphorquinone. Suitable electron donor compounds include substituted amines, e.g., ethyl 4-(dimethylamino)benzoate and 2-butoxyethyl 4-(dimethylamino)benzoate; and polycondensed aromatic compounds (e.g. anthracene).

The initiator system is present in an amount sufficient to provide the desired rate of hardening (e.g., polymerizing and/or crosslinking). For a photoinitiator, this amount will be dependent in part on the light source, the thickness of the layer to be exposed to radiant energy, and the extinction coefficient of the photoinitiator. Preferably, the initiator system is present in a total amount of at least 0.01 wt-%, more preferably, at least 0.03 wt-%, and most preferably, at least 0.05 wt-%, based on the weight of the dental composition. Preferably, the initiator system is present in a total amount of no more than 10 wt-%, more preferably, no more than 5 wt-%, and most preferably, no more than 2.5 wt-%, based on the weight of the dental composition.

### REDOX INITIATOR SYSTEMS

In certain embodiments, the dental compositions of the present invention are chemically hardenable, i.e., the dental compositions contain a chemically hardenable component and a chemical initiator (i.e., initiator system) that can polymerize, cure, or otherwise harden the dental composition without dependence on irradiation with actinic radiation. Such chemically hardenable dental compositions are sometimes referred to as "self-cure" compositions and may include glass ionomer cements, resin-modified glass ionomer cements, redox cure systems, and combinations thereof.

The chemically hardenable dental compositions may include redox cure systems that include a hardenable component (e.g., an ethylenically unsaturated polymerizable component) and redox agents that include an oxidizing agent and a reducing agent. Suitable hardenable components, redox agents, optional acid-functional components, and optional fillers that are useful in the present invention are described in U.S. Pat. Application Publication Nos. 2003/0166740 (Mitra et al.) and 2003/0195273 (Mitra et al.).

The reducing and oxidizing agents should react with or otherwise cooperate with one another to produce free-radicals capable of initiating polymerization of the resin system (e.g., the ethylenically unsaturated component). This type of cure is a dark reaction, that is, it is not dependent on the presence of light and can proceed in the absence of light. The reducing and oxidizing agents are preferably sufficiently shelf-stable and free of undesirable colorization to permit their storage and use under typical dental conditions. They should be sufficiently miscible with the resin system (and preferably water-soluble) to permit ready dissolution in (and discourage separation from) the other components of the hardenable dental composition.

Useful reducing agents include ascorbic acid, ascorbic acid derivatives, and metal complexed ascorbic acid compounds as described in U.S. Pat. No. 5,501,727 (Wang et al.); amines, especially tertiary amines, such as 4-tert-butyl dimethylaniline; aromatic sulfinic salts, such as p-toluenesulfinic salts and benzenesulfinic salts; thioureas, such as 1-ethyl-2-thiourea, tetraethyl thiourea, tetramethyl thiourea, 1,1-dibutyl thiourea, and 1,3-dibutyl thiourea; and mixtures thereof. Other secondary reducing agents may include cobalt (II) chloride, ferrous chloride, ferrous sulfate, hydrazine, hydroxylamine (depending on the choice of oxidizing agent), salts of a dithionite or sulfite anion, and mixtures thereof. Preferably, the reducing agent is an amine.

Suitable oxidizing agents will also be familiar to those skilled in the art, and include but are not limited to persulfuric acid and salts thereof, such as sodium, potassium, ammonium, cesium, and alkyl ammonium salts. Additional oxidizing agents include peroxides such as benzoyl peroxides, hydroperoxides such as cumyl hydroperoxide, t-butyl hydroperoxide, and amyl hydroperoxide, as well as salts of transition metals such as cobalt (III) chloride and ferric chloride, cerium (IV) sulfate, perboric acid and salts thereof, permanganic acid and salts thereof, perphosphoric acid and salts thereof, and mixtures thereof.

It may be desirable to use more than one oxidizing agent or more than one reducing agent. Small quantities of transition metal compounds may also be added to accelerate the rate of redox cure. In some embodiments it may be preferred to include a secondary ionic salt to enhance the stability of the polymerizable composition as described in U.S. Pat. Application Publication No. 2003/0195273 (Mitra et al.).

The reducing and oxidizing agents are present in amounts sufficient to permit an adequate free-radical reaction rate. This can be evaluated by combining all of the ingredients of the hardenable dental composition except for the optional filler, and observing whether or not a hardened mass is obtained.

Preferably, the reducing agent is present in an amount of at least 0.01% by weight, and more preferably at least 0.1% by weight, based on the total weight (including water) of the components of the hardenable dental composition. Preferably, the reducing agent is present in an amount of no greater than 10% by weight, and more preferably no greater than 5% by weight, based on the total weight (including water) of the components of the hardenable dental composition.

Preferably, the oxidizing agent is present in an amount of at least 0.01 % by weight, and more preferably at least 0.10% by weight, based on the total weight (including water) of the components of the hardenable dental composition. Preferably, the oxidizing agent is present in an amount of no greater than 10% by weight, and more preferably no greater than 5% by weight, based on the total weight (including water) of the components of the hardenable dental composition.

The reducing or oxidizing agents can be microencapsulated as described in U.S. Pat. No. 5,154,762 (Mitra et al.). This will generally enhance shelf stability of the hardenable dental composition, and if necessary permit packaging the reducing and oxidizing agents together. For example, through appropriate selection of an encapsulant, the oxidizing and reducing agents can be combined with an acid-functional component and optional filler and kept in a storage-stable state. Likewise, through appropriate selection of a water-insoluble encapsulant, the reducing and oxidizing agents can be combined with an FAS glass and water and maintained in a storage-stable state.

A redox cure system can be combined with other cure systems, e.g., with a hardenable dental composition such as described U.S. Pat. No. 5,154,762 (Mitra et al.).

### FILLERS

In certain preferred embodiments, the hardenable dental composition is unfilled. In other certain embodiments, the hardenable dental composition further includes a filler. Fillers can be selected from one or more of a wide variety of materials suitable for incorporation in compositions used for dental applications, such as fillers currently used in dental restorative compositions, and the like.

The filler is preferably finely divided. The filler can have a unimodal or polymodal (e.g., bimodal) particle size distribution. Preferably, the maximum particle size (the largest dimension of a particle, typically, the diameter) of the filler is less than 30 micrometers, more preferably less than 20 micrometers, and most preferably less than 10 micrometers. Preferably, the average particle size of the filler is less than 0.1 micrometers, and more preferably less than 0.075 micrometer.

The filler can be an inorganic material. It can also be a crosslinked organic material that is insoluble in the resin system (i.e., the hardenable components), and is optionally filled with inorganic filler. The filler should in any event be nontoxic and suitable for use in the mouth. The filler can be radiopaque or radiolucent. The filler typically is substantially insoluble in water.

Examples of suitable inorganic fillers are naturally occurring or synthetic materials including, but not limited to: quartz (i.e., silica, SiO2); nitrides (e.g., silicon nitride); glasses and fillers derived from, for example, Zr, Sr, Ce, Sb, Sn, Ba, Zn, and A1; feldspar; borosilicate glass; kaolin; talc; zirconia; titania; low Mohs hardness fillers such as those described in U.S. Pat. No. 4,695,251 (Randklev); and submicron silica particles (e.g., pyrogenic silicas such as those available under the trade designations AEROSIL, including "OX 50," "130," "150" and "200" silicas from Degussa Corp., Akron, OH and CAB-O-SIL M5 silica from Cabot Corp., Tuscola, IL). Examples of suitable organic filler particles include filled or unfilled pulverized polycarbonates, polyepoxides, and the like.

Preferred non-acid-reactive filler particles are quartz (i.e., silica), submicron silica, zirconia, submicron zirconia, and non-vitreous microparticles of the type described in U.S. Pat. No. 4,503,169 (Randklev). Mixtures of these non-acid-reactive fillers are also contemplated, as well as combination fillers made from organic and inorganic materials.

The filler can also be an acid-reactive filler. Suitable acid-reactive fillers include metal oxides, glasses, and metal salts. Typical metal oxides include barium oxide, calcium oxide, magnesium oxide, and zinc oxide. Typical glasses include borate glasses, phosphate glasses, and fluoroaluminosilicate ("FAS") glasses. FAS glasses are particularly preferred. The FAS glass typically contains sufficient elutable cations so that a hardened dental composition will form when the glass is mixed with the components of the hardenable dental composition. The glass also typically contains sufficient elutable fluoride ions so that the hardened dental composition will have cariostatic properties. The glass can be made from a melt containing fluoride, alumina, and other glass-forming ingredients using techniques familiar to those skilled in the FAS glassmaking art. The FAS glass typically is in the form of particles that are sufficiently finely divided so that they can conveniently be mixed with the other cement components and will perform well when the resulting mixture is used in the mouth.

Generally, the average particle size (typically, diameter) for the FAS glass is no greater than 12 micrometers, typically no greater than 10 micrometers, and more typically no greater than 5 micrometers as measured using, for example, a sedimentation analyzer. Suitable FAS glasses will be familiar to those skilled in the art, and are available from a wide variety of commercial sources, and many are found in currently available glass ionomer cements such as those commercially available under the trade designations VITREMER, VITREBOND, RELY X LUTING CEMENT, RELY X LUTING PLUS CEMENT, PHOTAC-FIL QUICK, KETAC-MOLAR, and KETAC-FIL PLUS (3M ESPE Dental Products, St. Paul, MN), FUJI II LC and FUJI IX (G-C Dental Industrial Corp., Tokyo, Japan) and CHEMFIL Superior (Dentsply International, York, PA). Mixtures of fillers can be used if desired.

The surface of the filler particles can also be treated with a coupling agent in order to enhance the bond between the filler and the resin. The use of suitable coupling agents include gamma-methacryloxypropyltrimethoxysilane, gamma-mercaptopropyltriethoxysilane, gamma-aminopropyltrimethoxysilane, and the like. Silane-treated zirconia-silica (ZrO₂-SiO2) filler, silane-treated silica filler, silane-treated zirconia filler, and combinations thereof are especially preferred in certain embodiments.

Other suitable fillers are disclosed in U.S. Pat. Nos. 6,387,981 (Zhang et al.) and 6,572,693 (Wu et al.) as well as International Pat. Application Publication Nos. WO 01/30305 (Zhang et al.), WO 01/30306 (Windisch et al.), WO 01/30307 (Zhang et al.), and WO 03/063804 (Wu et al.). Filler components described in these references include nanosized silica particles, nanosized metal oxide particles, and combinations thereof. Nanofillers are also described in U.S. Pat. Nos. 7,090,721 (Craig et al.) and 7,090,722 (Budd et al.); and U.S. Pat. Application Publication Nos. 2005/0252413 A1 (Kangas et al.) and 2005/0256223 A1 (Kolb et al.).

For embodiments in which the hardenable dental composition includes one or more fillers, the hardenable dental composition preferably includes at least 1% by weight filler, more preferably at least 2% by weight filler, and most preferably at least 5% by weight filler. For embodiments in which the hardenable dental composition includes one or more fillers, the hardenable dental composition preferably includes at most 85% by weight filler, more preferably at most 50% by weight filler, and most preferably at most 25% by weight filler.

In certain preferred embodiments, unfilled or lightly filled hardenable dental compositions provide for easy cleanup of excess hardenable and/or hardened dental composition. Lightly filled hardenable dental compositions typically include at most 35% by weight filler, more preferably at most 20% by weight filler, and most preferably at most 10% by weight filler. Examples of unfilled and/or lightly filled hardenable dental compositions include primers and/or self-etching primers.

In certain preferred embodiments, the hardenable dental composition (e.g., filled or unfilled) is flowable during application, for example, at oral temperatures (e.g., 37°C) in the methods described herein. As used herein, a "flowable" hardenable dental composition means that the dental composition deforms or flows under its own weight at oral temperatures (e.g., 37°C). Certain "flowable" hardenable dental compositions deform or flow under their own weight at room temperature (e.g., 20-25°C).

### OPTIONAL PHOTOBLEACHABLE AND/OR THERMOCHROMIC DYES

In some embodiments, hardenable dental compositions of the present invention preferably have an initial color remarkably different than dental structures. Color is preferably imparted to the dental composition through the use of a photobleachable or thermochromic dye. The dental composition preferably includes at least 0.001% by weight photobleachable or thermochromic dye, and more preferably at least 0.002% by weight photobleachable or thermochromic dye, based on the total weight of the dental composition. The dental composition preferably includes at most 1% by weight photobleachable or thermochromic dye, and more preferably at most 0.1% by weight photobleachable or thermochromic dye, based on the total weight of the dental composition. The amount of photobleachable and/or thermochromic dye may vary depending on its extinction coefficient, the ability of the human eye to discern the initial color, and the desired color change. Suitable thermochromic dyes are disclosed, for example, in U.S. Pat. No. 6,670,436 (Burgath et al.).

For embodiments including a photobleachable dye, the color formation and bleaching characteristics of the photobleachable dye varies depending on a variety of factors including, for example, acid strength, dielectric constant, polarity, amount of oxygen, and moisture content in the atmosphere. However, the bleaching properties of the dye can be readily determined by irradiating the dental composition and evaluating the change in color. Preferably, at least one photobleachable dye is at least partially soluble in a hardenable resin.

Exemplary classes of photobleachable dyes are disclosed, for example, in U.S. Pat. Nos. 6,331,080 (Cole et al.), 6,444,725 (Trom et al.), and 6,528,555 (Nikutowski et al.). Preferred dyes include, for example, Rose Bengal, Methylene Violet, Methylene Blue, Fluorescein, Eosin Yellow, Eosin Y, Ethyl Eosin, Eosin bluish, Eosin B, Erythrosin B, Erythrosin Yellowish Blend, Toluidine Blue, 4',5'-Dibromofluorescein, and combinations thereof.

The color change in the inventive compositions is initiated by light. Preferably, the dental composition's color change is initiated using actinic radiation using, for example, a dental curing light which emits visible or near infrared (IR) light for a sufficient amount of time. The mechanism that initiates the color change in the dental compositions of the invention may be separate from or substantially simultaneous with the hardening mechanism that hardens the resin. For example, a composition may harden when polymerization is initiated chemically (e.g., redox initiation) or thermally, and the color change from an initial color to a final color may occur subsequent to the hardening process upon exposure to actinic radiation.

The change in composition color from an initial color to a final color is preferably quantified by a color test. Using a color test, a value of ΔE^{∗} is determined, which indicates the total color change in a 3-dimensional color space. The human eye can detect a color change of approximately 3 ΔE^{∗} units in normal lighting conditions. The dental compositions of the present invention are preferably capable of having a color change, ΔE^{∗}, of at least 20; more preferably, ΔE^{∗} is at least 30; most preferably ΔE^{∗} is at least 40.

### MISCELLANEOUS OPTIONAL ADDITIVES

Optionally, compositions of the present invention may contain solvents (e.g., alcohols (e.g., propanol, ethanol), ketones (e.g., acetone, methyl ethyl ketone), esters (e.g., ethyl acetate), other nonaqueous solvents (e.g., dimethylformamide, dimethylacetamide, dimethylsulfoxide, 1-methyl-2-pyrrolidinone)), and water.

If desired, the dental compositions of the invention can contain additives such as indicators, dyes, pigments, inhibitors, accelerators, viscosity modifiers, wetting agents, buffering agents, stabilizers, and other similar ingredients that will be apparent to those skilled in the art. Viscosity modifiers include the thermally responsive viscosity modifiers (such as PLURONIC F-127 and F-108 available from BASF Wyandotte Corporation, Parsippany, NJ) and may optionally include a polymerizable moiety on the modifier or a polymerizable component different than the modifier. Such thermally responsive viscosity modifiers are described in U.S. Pat. No. U.S. 6,669,927 (Trom et al.) and U.S. Pat. Application Publication No. 2004/0151691 (Oxman et al.).

Additionally, medicaments or other therapeutic substances can be optionally added to the dental compositions. Examples include, but are not limited to, fluoride sources, whitening agents, anticaries agents (e.g., xylitol), calcium sources, phosphorus sources, remineralizing agents (e.g., calcium phosphate compounds), enzymes, breath fresheners, anesthetics, clotting agents, acid neutralizers, chemotherapeutic agents, immune response modifiers, thixotropes, polyols, anti-inflammatory agents, antimicrobial agents (in addition to the antimicrobial lipid component), antifungal agents, agents for treating xerostomia, desensitizers, and the like, of the type often used in dental compositions. Combination of any of the above additives may also be employed. The selection and amount of any one such additive can be selected by one of skill in the art to accomplish the desired result without undue experimentation.

### METHODS

Dental articles (e.g., orthodontic appliances) having a compressible material bonded to the surface thereof may be bonded to a tooth structure using methods (e.g., direct or indirect bonding methods) that are well known in the art.

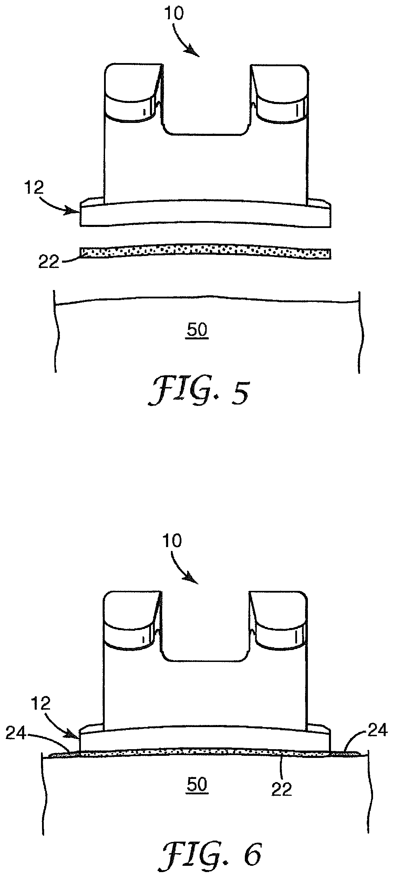

For the embodiment illustrated in Fig. 5, compressible material 22 includes a hardenable dental composition. Compressible material 22 is illustrated in Fig. 5 as not being provided as bonded to base 12 of orthodontic appliance 10. However, orthodontic appliance 10 can optionally be provided having compressible material 22 bonded to base 12 of appliance 10 as described herein. For embodiments that encompass indirect bonding methods, base 12 of appliance 10 can be a custom base, which can optionally be formed from a compressed, compressible material as described herein.

In one embodiment, compressible material 22 (either alone or bonded to base 12 of orthodontic appliance 10) is supplied having a hardenable dental composition therein. In another embodiment, a hardenable dental composition can be added to compressible material 22 (either alone or bonded to base 12 of orthodontic appliance 10) by a practitioner. For example, the practitioner can apply a hardenable dental composition to compressible material 22, or compressible material 22 can be dipped or immersed in a hardenable dental composition.

A dental article (e.g., an orthodontic appliance) can be bonded to a tooth structure using compressible materials and hardenable dental compositions as described herein, using direct and/or indirect methods. For the embodiment illustrated in Fig. 5, compressible material 22 including a hardenable dental composition is contacted with tooth structure 50 and base 12 of orthodontic appliance 10; and the hardenable dental composition is hardened. During this procedure, the orthodontic appliance is applied to the tooth structure with sufficient pressure to substantially fill any gaps between the appliance and tooth structure as illustrated in Fig. 6. Because the tooth structure surface may not be planar, compressible material 22 can be essentially completely compressed (e.g., at most 10% original pore volume remaining) in some areas, and essentially uncompressed (e.g., at least 90% of original pore volume remaining), or somewhat compressed in other areas. In certain embodiments, compressing compressible material 22 as completely as possible to minimize the distance between appliance 10 and tooth structure 50 can be advantageous for accurately expressing the prescription of the appliance. For certain embodiments, compressible material 22 can have an initial (uncompressed) thickness of 1.2 millimeters (mm) (0.05 inch) to 2.5 mm (0.1 inch), and a compressed thickness in at least some portions of 0.12 mm (0.005 inch) to 0.25 mm (0.01 inch) (e.g., a compressed thickness that is 0.1 times the uncompressed thickness). As illustrated in Fig. 6, compressing compressible material 22 can cause excess hardenable dental composition 24 to exude from compressed compressible material 22 onto tooth structure 50 at or near the periphery of appliance 10.

In some embodiments, pressure can be applied to the compressible material during hardening to prevent rebound of the compressible material. In other embodiments, the compressible material will remain compressed even after pressure is relieved.

The tooth structure can be untreated or treated. In some embodiments tooth structure 50 is treated with a self-etching primer prior to contacting compressible material 22 with tooth structure 50. For such embodiments, the hardenable dental composition can typically be hardened during or immediately after compressing the compressible material. In some embodiments, the hardenable dental composition is self-etching, and the tooth structure can be untreated prior to applying appliance 10. For such embodiments, the hardenable dental composition preferably contacts the tooth structure for a period of time (e.g., 15 seconds or more) prior to hardening the hardenable dental composition.

Upon application of orthodontic appliance 10 to tooth structure 50, the hardenable dental composition and/or compressible material (e.g., for embodiments in which the compressible material is, for example, a foamed, partially hardened dental composition) can be hardened to adhere the orthodontic appliance to the tooth structure. A variety of suitable methods of hardening the dental composition are known in the art. For example, in some embodiments the hardenable dental composition can be hardened by exposure to UV or visible light. In other embodiments, the hardenable dental composition can be provided as a multi-part composition that hardens upon combining the two or more parts.

The compressible materials as described herein is for indirect bonding methods. For indirect bonding methods, orthodontic appliances are placed on a model (e.g., replica plaster or "stone" model) of the patient's dental arch to provide a custom base for later mounting on the patient's tooth structure, commonly using a placement device. The orthodontic appliances have a compressible material bonded to the bases thereof for bonding to the replica plaster or "stone" model. Thus, the compressible material can be compressed to form a custom base, for example, upon hardening of a hardenable dental composition. Exemplary indirect bonding methods are described, for example, in U.S. Pat. Application Publication No. 2005/0074716 A1 (Cleary et al.). In another embodiment, brackets are held in place on the model during formation of the placement device using a temporary adhesive. The compressible material and hardenable composition can be added to the bracket base at any time between removal from the model and insertion in the patient's mouth.

In another embodiment, an indirect bonding placement device can be formed about a rapid prototyping model (e.g., prepared by stereolithography, selective laser sintering, fused deposition modeling, and the like, or combinations thereof) of the patient's teeth with appliances attached. Such a rapid prototyping model can be produced from data supplied by a scan of an impression of the patient's teeth, a model of the patient's teeth, or of the teeth directly. Brackets can be held in place during formation of the placement device, for example, by a temporary adhesive or by friction fit with the guides as described, for example, in U.S. Pat. Application Publication No. 2006/0257821-A1 (Cinader et al.). Compressible material can be added to the bracket bases following removal from the stereolithography model. For embodiments in which the brackets are held in place by friction fit with the placement guides, compressible material can be bonded to the brackets prior to placement in the guides. If not already present, a hardenable dental composition can be added to the compressible material at any time from immediately following removal from the rapid prototyping model to immediately prior to placement in the patient's mouth.

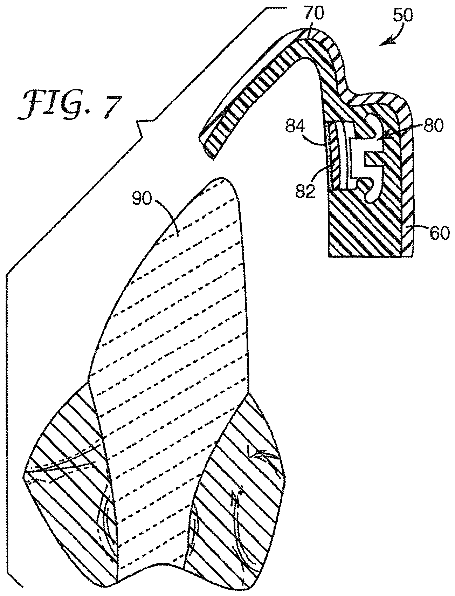

In yet another embodiment of indirect bonding methods, the orthodontic appliance provided in the placement device can include a compressible material bonded to a custom base (which can optionally be formed from a compressed, compressible material) for bonding to a patient's tooth. Referring to Fig. 7, the placement device 50 (comprising shell 60, matrix material 70, and appliances 80) is shown in cross-sectional view. The appliances 80 include custom bases 82 having bonded thereto compressible material 84, which can optionally include a hardenable dental composition. The placement device 50 can then be placed in a package by the manufacturer and shipped to the practitioner's office.

Once the patient has returned to the office, the bonding procedure is undertaken. After any tooth preparation steps are completed, the package (if present) is opened and placement device 50 is removed from the package. A hardenable dental composition can be added to compressible material 84, for example, if compressible material 84 does not already include a hardenable dental composition. The shell 60 is then positioned over the corresponding teeth and seated, optionally with a swinging, hinge-type motion. In Fig. 7, the patient's tooth is designated by the numeral 90. Since the shape of the cavity of the matrix material 70 matches the shape of the underlying teeth, the appliances 80 are simultaneously seated against the underlying teeth 90 at precisely the same locations corresponding to the previous position of the appliances 80 on the replica. Preferably, pressure is then applied to the occlusal, labial and buccal surfaces of the shell 60 until such time as the compressible material 84 has been sufficiently compressed, and oftentimes until the hardenable dental composition and/or compressible material (e.g., for embodiments in which the compressible material is, for example, a foamed, partially hardened dental composition) have been hardened. Optionally, finger pressure may be used to firmly press the appliances 80 against the enamel surfaces of the patient's teeth 90.

Upon application of appliances 80 to the enamel surfaces of the patient's teeth 90, the hardenable dental composition and/or compressible material (e.g., for embodiments in which the compressible material is, for example, a foamed, partially hardened dental composition) can be hardened to adhere appliances 80 to the enamel surfaces of the patient's teeth 90. A variety of suitable methods of hardening the dental composition are known in the art. For example, in some embodiments the hardenable dental composition can be hardened by exposure to UV or visible light. In other embodiments, the hardenable dental composition can be provided as a multi-part composition that hardens upon combining the two or more parts.

Once the hardenable dental composition has hardened, the shell 60 is carefully removed from the patient's dental arch. Preferably, the shell 60 is first separated from the matrix material 70, which remains in place over the dental arch along with the appliances 80. Next, the matrix material 70 is detached from the appliances 80. Optionally, a hand instrument such as a scaler may be used to help hold each appliance 80 against the surface of the respective tooth 90 of the patient as the matrix material 70 is peeled away from the appliances 80. However, in instances where a relatively soft matrix material is employed or otherwise readily releases from the appliances 80, the use of a scaler to help avoid fracturing the fresh adhesive bond is optional. As another option, the shell 60 may be separated from the matrix material 70 before the hardenable dental composition has hardened. This option is particularly useful when the hardenable dental composition includes a light-curable adhesive. Once the matrix material 70 has been detached from the appliances 80, an archwire is placed in the slots of the appliances 80 and ligated in place.

Advantageously, for embodiments in which the hardenable dental composition is unfilled or lightly filled, the practitioner may not need to remove excess dental composition (e.g., hardened or unhardened) from the tooth structure.

If removal of excess dental composition is desired, removal of unfilled or lightly filled dental composition (e.g., hardened or unhardened) can typically be effected by rinsing with water, applying toothpaste, brushing, or a combination thereof, by the practitioner or patient, which can reduce the risk of dislodging the appliance and/or damaging enamel that can be encountered during removal of excess highly filled hardened dental composition. In another embodiment, such excess unfilled or lightly filled hardenable or hardened dental composition can remain on the tooth as, for example, a sealant that can preferably provide additional protection to the tooth structure.

Objects and advantages of this invention are further illustrated by the following examples. Note however that the particular materials and amounts thereof recited in these examples, as well as other conditions and details, should not be construed to unduly limit this invention. Unless specified otherwise, all parts and percentages are by weight, all water is de-ionized water, all molecular weights are weight average molecular weight, and all chemicals and reagents were obtained from Sigma-Aldrich Corp., located in St. Louis, MO.

### EXAMPLES

As used herein:
"SEP" refers to an orthodontic self-etching primer available under the trade designation TRANSBOND Plus Self Etching Primer from 3M Co., St. Paul, MN,
"TBXT Primer" refers to an unfilled orthodontic primer, available under the trade designation TRANSBOND XT Primer from 3M Co., St. Paul, MN,
"TBXT Adhesive" refers to a filled orthodontic adhesive, available under the trade designation TRANSBOND XT Adhesive from 3M Co., St. Paul, MN.

### Bond strength testing

The adhesive strength of brackets bonded to bovine teeth was determined using the following standardized method. First, each sample was mounted with the gingival tie wings oriented upward in a test fixture attached to a QTEST/5 mechanical testing machine (MTS Systems Corporation, Eden Prairie, MN). A 0.020 inch diameter standard round wire was looped under the occlusal tie wings and attached to the crosshead of the testing machine. After initial crosshead position was adjusted to make the wire snug, it was translated upward at 5 millimeters per minute (0.2 inches per minute) until the bracket was debonded. Maximum force was recorded and divided by the measured surface area of the bracket base to obtain bond strength. Each reported bond strength value represents an average of ten replicated measurements.

### Example 1

To prepare substrates for bond strength testing, bovine incisors free of soft tissue were embedded in circular acrylic disks with labial surfaces exposed. The labial surfaces of the embedded teeth were then scrubbed with slurry of pumice in water and rinsed. Each tooth was first etched and primed to prepare the enamel surface for bonding. This was accomplished by rubbing SEP for 3-5 seconds onto the enamel surface using the enclosed applicator according to product instructions. A gentle air stream was then directed to the bonding area using an air syringe for approximately 3 seconds to thin out the SEP coating and remove excess moisture.

To prepare the foam for bonding, a 3M Disposable Mini-Sponge Applicator (Product No. 7522S, available from 3M Co., St. Paul, MN), was dipped into the TBXT Primer to fully saturate the foam. The primer-filled foam was then interposed between a Victory Series upper central bracket (Product No. 017-401 or similar, 3M Unitek, Monrovia, CA) and the enamel surface. After fully seating the bracket and foam onto the tooth, the primer was cured by irradiating the mesial and distal sides of the bracket for 5 seconds each using an Ortholux LED curing light (3M Unitek, St. Paul, MN).

Bonded samples were stored in water at 25°C for 24 hours. Subsequently, bond strength testing on these samples proceeded according to the procedure described earlier. The results of these tests on Example 1 are given in Table 1.

**Table 1. Bond strength data on example 1.**

| | Mean bond strength (MPa) | Standard deviation (MPa) |
|---|---|---|
| Example 1 | 9.38 | 2.57 |
| Comparative example 1 | 15.6 | 2.57 |

### Comparative Example 1

To prepare substrates for bond strength testing, bovine incisors free of soft tissue were embedded in circular acrylic disks with labial surfaces exposed. The labial surfaces of the embedded teeth were then scrubbed with slurry of pumice in water and rinsed. Each tooth was first etched and primed to prepare the enamel surface for bonding. This was accomplished by rubbing SEP for 3-5 seconds onto the enamel surface using a microbrush applicator according to product instructions. A gentle air stream was then directed to the bonding area using an air syringe to thin out the SEP coating and remove excess moisture.

Approximately 10 milligrams of TBXT Adhesive was then applied via syringe to the base of Victory Series upper central brackets (just enough to cover the bracket base). The bracket with adhesive was fully seated onto the tooth surface and the excess adhesive removed from the periphery of the bracket base. The adhesive was then cured by irradiating the mesial and distal sides of the bracket for 5 seconds each using an Ortholux LED curing light.

All bonded samples were stored in water at 25°C for 24 hours. Subsequently, bond strength testing on these samples proceeded according to the procedure described earlier.

The bond strength results on comparative example 1 are also shown in Table 1. The comparison between the foam based adhesive and control adhesive show that the foam adhesive produced significantly lower bond strength. However, both adhesives yield clinically acceptable bond strengths exceeding 8 MPa per bracket. Standard deviation in measured bond strength was similar between the two adhesives.

The foregoing detailed description and examples have been given for clarity of understanding only.

## Claims

1. A method for bonding a dental article (5) to a tooth model, the method comprising:
providing a dental article (5) comprising a porous compressible material (22) having a hardenable dental composition at least partially disposed therein,
wherein the porous compressible material (22) is selected from the group consisting of foams, sponges, nonwoven fabrics, nonwoven mats, glass wool, cotton fibers, cellulose fibers, and combinations thereof;
contacting the dental article (5) having a porous compressible material (22) and the tooth model, such that the porous compressible material (22) is in contact with the tooth model; and
hardening the dental composition to provide a hardened dental composition,
wherein the hardened dental composition adheres the dental article (5) to the tooth model via the porous compressible material (22).

2. The method of claim 1, wherein the porous compressible material is reduced in volume upon contacting the dental article having the porous compressible material and the tooth surface.

3. The method of claim 1 or 2, wherein the dental article is an orthodontic appliance.

4. The method of any one of the preceding claims, wherein the dental article is an orthodontic bracket.

5. The method of any one of the preceding claims, wherein the tooth model is replica plaster, stone, or a combination thereof.

6. The method of any one of the preceding claims, wherein the tooth model is for use as a custom base for an indirect bonding method.

7. The method of any one of the preceding claims, wherein the hardenable dental composition comprises:
a first compound comprising a (meth)acryloxy group and a -O-P(O)(OH)ₓ group separated by a C₁-C₄ hydrocarbon group; and
a second compound comprising a (meth)acryloxy group and a -O-P(O)(OH)ₓ group separated by a C₅-C₁₂ hydrocarbon group,
wherein each x is independently 1 or 2.

8. The method of any one of the preceding claims, wherein the hardenable dental composition is a primer or a self-etching primer.

9. The method of any of the preceding claims, wherein excess hardenable dental composition does not exude onto the tooth model beyond the periphery of the dental article upon the contacting of the dental article having a porous compressible material and the tooth model.

10. The method of any one of claims 1-8, further comprising removing an excess of the hardenable dental composition or the hardened dental composition.

11. The method of claim 10, wherein the removing of the excess hardenable dental composition or the hardened dental composition comprises rinsing with water, applying toothpaste, brushing, or a combination thereof.

12. The method of any one of the preceding claims, wherein the hardenable dental composition comprises no greater than 25% filler.

13. The method of any one of the preceding claims, wherein the porous compressible material is reduced in volume upon contacting the dental article having a porous compressible material and the tooth model.

## Patentansprüche

1. Ein Verfahren zum Binden eines Dentalartikels (5) an ein Zahnmodell, wobei das Verfahren umfasst: Bereitstellen eines Dentalartikels (5), umfassend ein poröses komprimierbares Material (22), das eine härtbare Dentalzusammensetzung aufweist, die mindestens teilweise darin angeordnet ist,
wobei das poröse komprimierbare Material (22) ausgewählt ist aus der Gruppe bestehend aus Schäumen, Schwämmen, Vliesstoffen, Vliesmatten, Glaswolle, Baumwollfasern, Cellulosefasern und Kombinationen davon;
Inkontaktbringen des Dentalartikels (5), der ein poröses komprimierbares Material (22) aufweist, und des Zahnmodells, sodass das poröse komprimierbare Material (22) mit dem Zahnmodell in Kontakt steht; und
Härten der Dentalzusammensetzung, um eine gehärtete Dentalzusammensetzung bereitzustellen, wobei die gehärtete Dentalzusammensetzung den Dentalartikel (5) über das poröse komprimierbare Material (22) an das Zahnmodell anhaftet.

2. Das Verfahren nach Anspruch 1, wobei das poröse komprimierbare Material beim Inkontaktbringen des Dentalartikels, der das poröse komprimierbare Material aufweist, und der Zahnoberfläche im Volumen verringert wird.

3. Das Verfahren nach Anspruch 1 oder 2, wobei der Dentalartikel eine kieferorthopädische Vorrichtung ist.

4. Das Verfahren nach einem der vorstehenden Ansprüche, wobei der Dentalartikel ein kieferorthopädisches Bracket ist.

5. Das Verfahren nach einem der vorstehenden Ansprüche, wobei das Zahnmodell Abdruckgips, -stein oder eine Kombination davon ist.

6. Das Verfahren nach einem der vorstehenden Ansprüche, wobei das Zahnmodell zur Verwendung als eine individuelle Basis für ein indirektes Bindungsverfahren dient.

7. Verfahren nach einem der vorstehenden Ansprüche, wobei die härtbare Dentalzusammensetzung umfasst:
eine erste Verbindung, umfassend eine (Meth)acryloxygruppe und eine -O-P(O)(OH)x-Gruppe, die durch eine C₁-C₄-Kohlenwasserstoffgruppe getrennt sind; und
eine zweite Verbindung, umfassend eine (Meth)acryloxygruppe und eine -O-P(O)(OH)x-Gruppe, die durch eine C₅-C₁₂-Kohlenwasserstoffgruppe getrennt sind,
wobei jedes x unabhängig 1 oder 2 ist.

8. Das Verfahren nach einem der vorstehenden Ansprüche, wobei die härtbare Dentalzusammensetzung ein Primer oder ein selbstätzender Primer ist.

9. Das Verfahren nach einem der vorstehenden Ansprüche, wobei sich überschüssige härtbare Dentalzusammensetzung beim Inkontaktbringen des Dentalartikels, der ein poröses komprimierbares Material aufweist, und des Zahnmodells nicht über den Umfang des Dentalartikels hinaus auf das Zahnmodell absondert.

10. Das Verfahren nach einem der Ansprüche 1-8, ferner umfassend das Entfernen eines Überschusses der härtbaren Dentalzusammensetzung oder der gehärteten Dentalzusammensetzung.

11. Das Verfahren nach Anspruch 10, wobei das Entfernen der überschüssigen härtbaren Dentalzusammensetzung oder der gehärteten Dentalzusammensetzung das Spülen mit Wasser, das Aufbringen von Zahnpasta, Bürsten oder eine Kombination davon umfasst.

12. Das Verfahren nach einem der vorstehenden Ansprüche, wobei die härtbare Dentalzusammensetzung nicht mehr als 25 % Füllstoff umfasst.

13. Das Verfahren nach einem der vorstehenden Ansprüche, wobei das poröse komprimierbare Material beim Inkontaktbringen des Dentalartikels, der ein poröses komprimierbares Material aufweist, und des Zahnmodells im Volumen verringert wird.

## Revendications

1. Procédé de liaison d'un article dentaire (5) à un modèle de dent, le procédé comprenant : la fourniture d'un article dentaire (5) comprenant un matériau compressible poreux (22) ayant une composition dentaire durcissable au moins partiellement disposée en son sein,
dans lequel le matériau compressible poreux (22) est choisi dans le groupe constitué de mousses, éponges, étoffes non tissées, mats non tissés, laine de verre, fibres de coton, fibres de cellulose, et combinaisons de ceux-ci ;
la mise en contact de l'article dentaire (5) ayant un matériau compressible poreux (22) et du modèle de dent, de telle sorte que le matériau compressible poreux (22) est en contact avec le modèle de dent ; et
le durcissement de la composition dentaire pour fournir une composition dentaire durcie, dans lequel la composition dentaire durcie fait adhérer l'article dentaire (5) au modèle de dent par l'intermédiaire du matériau compressible poreux (22).

2. Procédé selon la revendication 1, dans lequel le matériau compressible poreux est réduit en volume lors d'un contact de l'article dentaire ayant le matériau compressible poreux et de la surface dentaire.

3. Procédé selon la revendication 1 ou 2, dans lequel l'article dentaire est un appareil orthodontique.

4. Procédé selon l'une quelconque des revendications précédentes, dans lequel l'article dentaire est un bracket orthodontique.

5. Procédé selon l'une quelconque des revendications précédentes, dans lequel le modèle de dent est une réplique en plâtre, en pierre, ou une combinaison de celles-ci.

6. Procédé selon l'une quelconque des revendications précédentes, dans lequel le modèle de dent est pour une utilisation en tant que base personnalisée pour un procédé de liaison indirecte.

7. Procédé selon l'une quelconque des revendications précédentes, dans lequel la composition dentaire durcissable comprend :
un premier composé comprenant un groupe (méth)acryloxy et un groupe -O-P(O)(OH)ₓ séparés par un groupe hydrocarboné en C₁ à C₄ ; et
un deuxième composé comprenant un groupe (méth)acryloxy et un groupe -O-P(O)(OH)ₓ séparés par un groupe hydrocarboné en C₅ à C₁₂,
dans lequel chaque x vaut indépendamment 1 ou 2.

8. Procédé selon l'une quelconque des revendications précédentes, dans lequel la composition dentaire durcissable est un apprêt ou un apprêt auto-mordançant.

9. Procédé selon l'une quelconque des revendications précédentes, dans lequel un excès de composition dentaire durcissable n'exsude pas sur le modèle de dent au-delà de la périphérie de l'article dentaire lors du contact de l'article dentaire ayant un matériau compressible poreux et du modèle de dent.

10. Procédé selon l'une quelconque des revendications 1 à 8, comprenant en outre le retrait d'un excès de la composition dentaire durcissable ou de la composition dentaire durcie.

11. Procédé selon la revendication 10, dans lequel le retrait de la composition dentaire durcissable en excès ou de la composition dentaire durcie comprend un rinçage avec de l'eau, une application de pâte dentifrice, un brossage, ou une combinaison de ceux-ci.

12. Procédé selon l'une quelconque des revendications précédentes, dans lequel la composition dentaire durcissable ne comprend pas plus de 25 % de charge.

13. Procédé selon l'une quelconque des revendications précédentes, dans lequel le matériau compressible poreux est réduit en volume lors d'un contact de l'article dentaire ayant un matériau compressible poreux et du modèle de dent.
